# EUROPEAN PATENT APPLICATION

(11) **EP 0 720 327 A2**
(43) Date of publication of application: **03.07.1996**
(21) Application number: 95120612.7
(22) Date of filing: 27.12.1995
(51) Int. Cl.: H04L 9/22

(54) **Device and method for generating pseudorandom noise sequence**

(30) Priority: 26.12.1994 JP 323001/94
(71) Applicant: NEC CORPORATION, Tokyo (JP)
(72) Inventor: O'Regan, Sean, Minato-ku, Tokyo (JP)
(74) Representative: Betten & Resch

(57) **Abstract**

A ROM lookup table (4) with a set of data for a PN sequence of a power-of-two length is addressed by a combination of an integrated value (S2) by a self-running N-bit binary counter (3) and a latched offset (S1) to be employed for an offset control of an output PN sequence (S4) to be effected by directly obtaining a desired value from the latched offset value, without the need of a mask computation, permitting an increased speed of operation and a reduced scale of circuitry.

## Description

### BACKGROUND OF THE INVENTION

The present invention generally relates to a device and a method for generating a sequence of pseudorandom noises (hereafter collectively "PN") for a spread spectrum (hereafter "SS") communication system as well as for a mobile communication system, and particularly, to a PN generating device and a PN generating method adaptive to a service needed for a transmitter and a receiver in an SS communication system to effect an offsetting control for putting into disorder a periodicity of a PN sequence cycling by an extremely long period so that a randomness is substantially ensured.

### Description of the Related Art

Pseudo-noise or pseudorandom noise generators are commonly used for a band spreading process and a band inverse-spreading process of SS communication systems.

For example, the Qualcomm's IS95, a CDMA (Code Division Multiple Access) digital cellular system covering a Nothern district of the U.S.A., employs a PN sequence of a power-of-two length for effecting a spread and an inverse spread as well as a synchronization in a receiver of a mobile-mounted terminal.

The United States Patent No. 5,228,054 discloses a power-of-two length pseudo-noise sequence generator with a fast offset adjustment, which generates a PN sequence of a power-of-two length, using a programmable mask for shifting the PN sequence to have a shifted output.

This mask-controlled PN generator comprises a PN generating circuit for generating a linear PN sequence with a maximum length of 2^{N} - 1, a sequence augmenting circuit for inserting an extra zero at a programmed place in the sequence to augment the sequence length to 2^{N}, and a mask shift circuit for determining a start point of the sequence.

This conventional PN generator has a pair of outputs: a first output composed of a PN sequence zero-shifted to a 2^{N} length, and a second output composed of the PN sequence of the 2^{N} length, as it is mask-shifted.

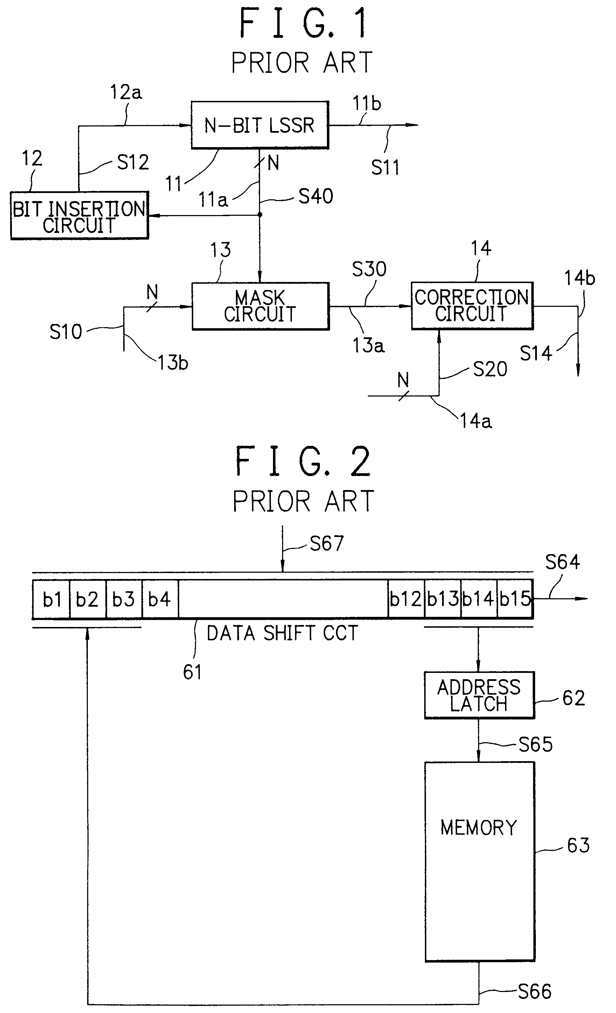

Fig. 1 shows the conventional PN generator in a block diagram.

In the diagram of Fig. 1, the conventional generator is composed of an N-bit LSSR (linear sequence shift register unit) 11, a bit insertion circuit 12, a mask circuit 13 and a correction circuit 14. The N-bit LSSR 11 is connected by an N-bit bus 11a to the bit insertion circuit 12 and the mask circuit 13. The bit insertion circuit 12 is connected by a signal line 12a to the N-bit LSSR 11. The mask circuit 13 is connected by a signal line 13a to the correction circuit 14. The N-bit LSSR 11 has a signal output line 11b, which provides a primary output signal S11. The mask circuit 13 is provided with an N-bit input bus 13b. The correction circuit 14 has an N-bit input bus 14a and a signal output line 14b which provides a shift output signal S14.

The N-bit LSSR 11, the bit insertion circuit 12 and the correction circuit 14 are operative in synchronism with an unshown system clock.

The mask circuit 13 receives an N-bit status output signal S40 input thereto from the N-bit LSSR 11 via the bus 11a and an N-bit mask signal S10 input thereto via the bus 13b, and generates an amount of shifted sequence as a shifted primary sequence, which is output as a shifted output S30 via the signal line 13a to the correction circuit 14.

The correction circuit 14 is controlled with an N-bit offset signal S20 input thereto via the bus 14a.

The PN generator provides the primary output signal S11, which comprises a final bit in LSSR 11 (i.e. a right-most bit in a right-shifting LSSR for a feedback use), and the shift output signal S14 as a phase-shifted sequence with respect to the primary output signal S11. Both shift output sequence and primary output sequence have the 2^{N} length.

The N-bit status output signal S40 from the N-bit LSSR 11 is input via the bus 11a to the bit insertion circuit 12 as well as to the mask circuit 13.

The bit insertion circuit 12 outputs a sequence enable signal S12 via the signal line 12a to an EN (enable) input of the N-bit LSSR 11.

As described, the N-bit status output signal S40 on the bus 11a and the N-bit mask signal on the bus 13b are input to the mask circuit 13, of which the shifted output S30 constitutes one input of the correction circuit 14, which has another input composed of the offset signal S20 from the bus 14a and outputs the shift output signal S14.

In the conventional circuit, the sequence having therein a sequence of non-inverted symbols including a total of N-1 "0"s is expanded by adding thereto another "0", to generate a sequence of symbols consisting of "0"s and "1"s identical in number to each other.

More specifically, a sequence that includes a sequence of non-inverted symbols composed of a total of N "1" s is converted so as to include also a sequence of non-inverted symbols composed of a total of N "0"s.

In Fig, 1, for a concerned signal value of the status output on the bus 11a, the bit insertion circuit 12 pulls down the sequence enable signal S12 to a low for a one-cycle period of the system clock, putting the N-bit LSSR 11 in a shift-prohibited state, expanding the primary output of a 2^{N} - 1 length into a PN sequence of the 2^{N} length.

The status output signal S40 is mask-shifted in the mask circuit 13, by an offset due to a mask value of the mask signal S10. The mask circuit 13 functions to be responsible for the longest PN sequence of 2^{N} - 1 length, but not for the expanded PN sequence of 2^{N} length, thus needing the correction circuit 14 as a post stage. Thus, the shifted output S30 from the mask circuit 13 is input as a shifted PN sequence to the correction circuit 14 of which the other input provides the N-bit offset signal S20 for a timing control of correction. The shift output signal S14 of the correction circuit 14 comprses the primary output sequence of 2^{N} length, as it is simply shifted, while the offset value is equivalent to the value of a bit of a shift relative to the primary output.

Accordingly, unpon a request for a PN sequence of e.g. a 2^{N} length capable of a voluntary sequence start at any of 2 ^{N} places thereof, there is needed a 2^{N} masking for an implemented contribution to any potential offset in a given power-of-two PN generator.

A CPU will thus have a great burden imposed thereon to calculate a mask each time when a varied mask is requested for an offset variation to be developed in a PN sequence.

Another example is known by the Japanese Patent Application Laid-Open Publication No. 3-11819, as well as by the Japanese Patent Application Laid-Open Publication No. 3-11820.

Fig. 2 shows the conventional example in a block diagram.

In the diagram of Fig. 2, a large-scale memory 63, which has stored at addresses therein, in a random order, a set of bits accessible to read as data S66 representing a PN sequence of a predetermined length, constitutes a loop with a combination of a data shift circuit 61 and an address latch circuit 62 cooperative therewith to provide a periodical address signal S65 to an address input of the memory 63 so that substantially pseudorandom noises S64 are generated. Designated at character S67 is a data setting line.

In this example, however, the set of bits in the memory 63 is unchanged as a whole so that sequentially read output data therefrom inherently have a periodicity, though they apparently might seem random.

The present invention has been achieved with such points in mind.

### SUMMARY OF THE INVENTION

It therefore is an object of the present invention to provide a device and a method for generating a PN sequence of a power-of-two length in an improved manner with a programmable offset, without the need of a mask, but by a direct use of a desired offset value for a shifted sequence.

It is another object of the present invention to provide a device and a method for generating a PN sequence, permitting an increased operation speed.

It is still another object of the present invention to provide a device and a method for generating a PN sequence, permitting a reduced scale of circuitry.

To achieve the objects, a genus of the present invention provides a pseudorandom noise generating device comprising: a memory having a relatively large scale for storing at addresses therein, in a random order, a number of bits representing a predetermined length of a pseudorandom noise sequence; an address generating circuit for providing a periodical address signal to an address input of the memory so that substantially pseudorandom noises are generated; and means for adding an offset value to the address input.

According to a species of the genus of the invention, the memory comprises a ROM having the address input responsible for an N bit mode, where N is a positive integer.

According to an individual of the species of the invention, the means for adding the offset value comprises a register responsible for the offset value input thereto to temporarily store therein the offset value in the N bit mode, and an addition circuit for adding an output of the register to the periodical address signal.

The address generating circuit may preferably comprise a binary counter operable in the N bit mode.

Further, to achieve the objects described, another genus of the present invention provides a pseudorandom noise generating method comprising the steps of: storing at addresses in a memory having a relatively large scale, in a random order, a number of bits representing a predetermined length of a pseudorandom noise sequence; providing a periodical address signal to an address input of the memory so that substantially pseudorandom noises are generated; and adding an offset value to the address input.

According to the invention, therefore, an offset value itself has a direct influence on a needed variation in an offset of a PN sequence.

A PN generator is thus programmable by using an offset value, without the need for a CPU to compute a mask value for a given offset value.

A ROM lookup table with a set of data for a PN sequence of a power-of-two length may thus be addressed by a combination of an integrated value by a self-running N-bit binary counter and a latched offset, to be employed for an offset control of an output PN sequence to be effected by directly obtaining a desired value from the latched offset value, without the need of a mask computation.

Accordingly, a simplified arrangement permits an offset control for putting in out of order a periodicity of pseudorandom noises output from a memory.

### BRIEF DESCRIPTION OF THE DRAWINGS

The objects, features and advantages of the present invention will become more apparent from consideration of the following detailed description, in conjunction with the accompanying drawings, in which:
Fig. 1 is a block diagram of a conventional PN generator;
Fig. 2 is a block diagram of another conventional PN generator; and
Fig. 3 is a block diagram of a PN generator according to an embodiment of the invention.

### DESCRIPTION OF THE PREFERRED EMBODIMENTS

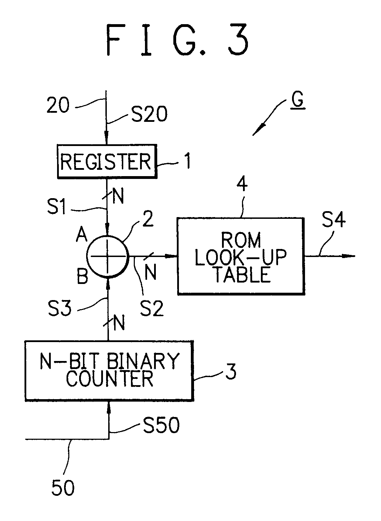

There will be detailed below the preferred embodiments of the present invention, with reference to Fig. 3.

Fig. 3 shows in a block diagram a PN generator according to an embodiment of the invention.

In Fig. 3, designated at character G is the PN generator according to the present embodiment. The PN generator G comprises a register 1 an adder 2, an N-bit binary counter 3 and a ROM look-up table 4.

The ROM look-up table 4 serves as a large-scale memory for storing at addresses therein, in a random order, a set of bit signals representative of a PN sequence of a predetermined length. The table 4 has an N-bit address input.

The N-bit binary counter 3 responds to a system clock signal S50 to serve as an address generator for providing a periodical address signal S3 to be applied to an address input of the ROM look-up table 4 to thereby generate substantially pseudorandom noises.

The register 1 serves to receive an offset signal S20 and temporarily store therein an N-bit offset value S1, as a means employable for adding an offset value to the address input of the table 4.

The adder 2 serves for adding the output S1 of the register 1 to the periodical address signal S3 from the N-bit binary counter 3.

Operations of the PN generator G will be described.

The PN generator G has as external inputs thereto the system clock signal S50 for clocking the N-bit binary counter 3 into actions, and the offset signal S20 input to the register 1 via an N-bit offset bus 20 coupled with an N-bit width to an unshown external device including a CPU, so that an offset value of PN sequence can be programmed,

The PN generator G outputs a one-bit shift output signal S4 as the PN sequence of 2^{N} length programmable of an offset.

In Fig. 3, the bus 20 of offset signal S20 is coupled to a total of N inputs of the register 1, of which a total of N outputs are coupled to an input A of the adder 2.

A clock input line 50 of the system clock signal S50 is connected to a clock input of the N-bit binary counter 3 of a self-propelled or self-running type, of which N bit outputs are coupled to an input B of the adder 2.

The adder 2 has an N-bit output S2 (without an abandoned overflow output) coupled to the address input of the ROM look-up table 4, of which a data output provides the shift output signal S4.

The offset value (at 20) is determined by the external device including the CPU, and written to the register 1 to have varied an offset of PN sequence of 2^{N} length relative to an offset zero.

The output S1 of the register 1 is added in the adder 2 to the output S3 of the N-bit binary counter 3, to provide the output S2 of the adder 2. The adder 2 approaches by one step, toward a certain value of its output, each time when the counter 3 is clocked by a rising edge of the system clock signal S50.

In the embodiment, the ROM look-up table 4 comprises a ROM of 2^{N} × 1 bits including a desired power-of-two PN sequence stored therein in an increasing order of address value, such that a first bit of the PN sequence is stored at an address "00 ··· 00" and a second bit is stored at a neighboring address "00···01", likewise thereafter.

A ROM address input goes one step with each rising edge of the system clock signal S50, having a subsequent bit in PN sequence output from a ROM data output, constituting the shift output signal S4.

The zero offset of PN sequence is deemed to be the shift output signal S4, as it is generated when all the N-bit offset values stored in the register 1 have become zero. A new offset value is then written to the register 1, to be added to the output S3 of the N-bit binary counter 3, to have an integrated value thereof sent to the address input of the ROM look-up table 4, causing a jump of an address input value, resulting in an offset, i.e. phase shift, in the shift output signal S4.

The offset signal value is identical in bit to a resultant offset in the PN sequence shift output signal in response to the zero offset PN sequence.

For a positive phase shift of continued X bits, a new offset value X larger than an old value is to be written to the register 1.

In the PN generator G, therefore, it has become unnecessary to calculate a mask value based on an offset value to cause a phase shift in the shift output signal S4.

Contrary thereto, the conventional examples described request a mask value to be calculated from an offset value such as by a CPU in an external device.

In the case of the Qualcomm's CDMA (IS95) system, such an update is sometimes requested,

Moreover, the mask calculation from an offset value needs, along with a frequent offset variation as in the IS95 system, a great amount of process steps that may occupy a remarkable proportion of an entirety of process work of a CPU, thus imposing a significant burden thereon.

According to the embodiment, however, it is unnecessary to calculate a mask value from an offset value to execute a phase shift of the shift output signal S4.

In place thereof, when a new offset value is written in the register 1, the PN generator G uses a phase shift, as it is put in an output, thereby solving the conventional problem.

Further, according to the embodiment, the execution of a phase shift is ensured to be free of delay, due to a significant length of a reserved time that otherwise might have been consumed for a mask calculation.

As will be seen from the foregoing description, according to the invention, there is implemented an improved generation of a power-of-two length PN sequence with a programmable offset, without employing a mask, but by a direct use of a desired offset value for a sequence shifting.

While the present invention has been described with reference to the particular illustrative embodiments, it is not to be restricted by those embodiments.

It is to be appreciated that those skilled in the art can change or modify the embodiments without departing from the scope and spirit of the present invention.

## Claims

1. A pseudorandom noise generating device (G) comprising:
a memory (4) having a relatively large scale for storing at addresses therein, in a random order, a number of bits representing a predetermined length of a pseudorandom noise sequence;
an address generating circuit (3) for providing a periodical address signal (S3) to an address input of the memory so that substantially pseudorandom noises are generated; and
means (1, 2) for adding an offset value (S1) to the address input.

2. A pseudorandom noise generating device according to claim 1, wherein the memory (4) comprises a ROM having the address input responsible for an N bit mode, where N is a positive integer.

3. A pseudorandom noise generating device according to claim 2, wherein the means (1, 2) for adding the offset value comprises:
a register (1) responsible for the offset value input thereto to temporarily store therein the offset value in the N bit mode; and
an addition circuit (2) for adding an output of the register to the periodical address signal.

4. A pseudorandom noise generating device according to claim 3, wherein the address generating circuit (3) comprises a binary counter operable in the N bit mode.

5. A pseudorandom noise generating method comprising the steps of:
storing at addresses in a memory (4) having a relatively large scale, in a random order, a number of bits representing a predetermined length of a pseudorandom noise sequence;
providing a periodical address signal (S3) to an address input of the memory so that substantially pseudorandom noises (S4) are generated; and
adding an offset value (S1) to the address input.
